# EUROPEAN PATENT SPECIFICATION

(11) **EP 3 427 030 B1**
(45) Date of publication and mention of the grant of the patent: **08.10.2025**
(21) Application number: 17763652.9
(22) Date of filing: 07.02.2017
(51) Int. Cl.: G01M 3/34, B66C 1/02, G01M 3/26, G01M 3/32

(54) **PRESSURE MEASUREMENT**
DRUCKMESSUNG
MESURE DE PRESSION

(30) Priority: 08.03.2016 SE 1650308
(43) Date of publication of application: 16.01.2019
(73) Proprietor: AVAC Vakuumteknik AB, 565 21 Mullsjö (SE)
(72) Inventor: ANDERSSON, Lars, 521 96 Falköping (SE)
(74) Representative: Kransell & Wennborg KB
(86) International application number: PCT/SE2017/050110
(87) International publication number: WO 2017/155445

(56) References cited:
- EP-A2- 1 110 557
- EP-A2- 1 232 990
- EP-A2- 1 775 243
- DE-A1- 10 009 167
- DE-A1- 19 639 263
- DE-C1- 4 106 916
- JP-A- H10 120 354
- JP-A- S4 853 148
- JP-B2- 2 997 862
- JP-B2- 2 997 862
- JP-U- S5 235 470
- US-A1- 2013 127 192
- US-B1- 9 205 558

## Description

### TECHNICAL FIELD

The present invention relates to a device and method for pressure measurement in a system.

### BACKGROUND

An ejector (also called e.g. aspirator, Venturi pump, ejector-jet pump, eductor-jet pump, injector, or thermocompressor, depending on type and use) may be used for sucking a gas out of a compartment to create a vacuum therein, typically by means of the Venturi effect. The Venturi effect is the reduction in fluid pressure that results when a fluid flows through a constricted section (or choke) of a pipe. This reduced pressure is used to suck out the gas. The fluid may be liquid, e.g. water (water aspirator), or gaseous, e.g. steam (steam ejector/injector) or compressed air.

An ejector may be used to create a vacuum for one or more suction cups to lift and transport objects e.g. in an industrial environment. The number of suction cups used depend on the size of the object to be lifted, or on the number of objects to be lifted at the same time e.g. from a conveyor belt.

An ejector may be connected to several suction cups, or each suction cup may be connected to a respective ejector. A vacuum source (such as an ejector) connected to several suction cups is often a cheaper solution, but with the drawback that if at least one of the suction cups is not in proper contact with the object to be lifted, the vacuum is spoiled also for the other suction cups connected to the same vacuum source. On the other hand, several vacuum sources, each connected to one or a group of suction cups, keeps the vacuum in the suction cups which are not connected to the same vacuum source as a leaking suction cup, but this is a more expensive solution. Also, in order to measure the vacuum in the suction cups, a sensor for each vacuum source is needed, further adding cost and complexity when a plurality of vacuum sources are used.

JP 2 997862 discloses an integrated suction lifting device connected with a pressure source arranged via valves to provide a vacuum to suction cups via venturi or to provide an overpressure via a vacuum break passage. A pressure sensor is connected to the vacuum break passage and detects whether or not the vacuum pressure of the vacuum pad is a predetermined value or more, whereby a control circuit closes a venturi valve.

### SUMMARY

It is an objective of the present invention to provide an improved device for pressure measurement in a system, e.g. overpressure or underpressure, solving or at least alleviating a problem with the prior art discussed above.

According to the present invention, there is provided a system, as in claim 1, comprising a plurality of pressure sources, a container enclosing a volume, and a pressure sensor arranged to detect a pressure in the enclosed volume. The container is connected to the pressure sources such that the enclosed volume is in separate fluid communication with each of said pressure sources.

According to another aspect of the present invention, there is provided a method for pressure measurement in a system, as in claim 13. The method comprises detecting a pressure in an enclosed volume of a container in fluid communication with a plurality of pressure sources, and determining, based on the detected pressure, that at least one of the pressure sources is leaking.

In some embodiments of the method, the determining comprises determining, based on the detected pressure, how many of the plurality of pressure sources 4 are leaking. This is possible since the pressure in the container typically depends on the number of leaking pressure sources, e.g. how many suction cups are not properly attached to an object to lift.

In some embodiments, the container is in the form of a pipe. The pipe may typically be a thin pipe, to define a small enclosed volume, and may run in a longitudinal direction of the system e.g. along and close to a row of suction cups or pressure sources for easy connection thereto.

In some embodiments, the pressure sources are vacuum ports. In some embodiments, the vacuum ports are connected to at least one vacuum ejector as discussed herein, whereby the system further comprises said at least one vacuum ejector connected to the vacuum ports. Alternatively, the vacuum ports may be connected to anther type of vacuum pump. In some embodiments, a respective vacuum ejector, or other vacuum pump, is connected to each of the vacuum ports.

In some embodiments, the at least one vacuum pump, e.g. ejector, is in fluid communication with at least two, e.g. all, of the vacuum ports, providing vacuum for a group of vacuum ports. In some embodiments, each of the vacuum ports is connected to a suction cup. In some embodiments, the at least one vacuum ejector is connected to a compressed air source. Alternatively, the at least one vacuum ejector is connected to another compressed fluid, e.g. water or steam. In some embodiments, a plurality of the ejectors are connected to the same pressure source of the compressed fluid. In some other embodiments, each ejector is connected to a respective pressure source of the compressed fluid.

Alternatively, in other embodiments, the pressure sources are sources of overpressure e.g. compressed air, if an overpressure is desired instead of a vacuum. The pressure sources may e.g. comprise pressure ports connected to compressors to provide an overpressure, in a corresponding way as e.g. ejectors provide a vacuum (underpressure) to a vacuum port pressure source.

Thus, in some other embodiments, the pressure sources are overpressure ports. In some embodiments, the overpressure ports are connected to at least one compressor or other overpressure pump, whereby the system further comprises said at least one compressor or other overpressure pump connected to the overpressure ports. In some embodiments, a respective compressor, or other overpressure pump, is connected to each of the overpressure ports. In some embodiments, the at least one overpressure pump, e.g. compressor, is in fluid communication with at least two, e.g. all, of the overpressure ports, providing overpressure for a group of overpressure ports.

By means of measuring the pressure in the container enclosing a volume, a leakage at any of the pressure sources can be determined without the need for a pressure sensor for each pressure source e.g. ejector, since all the pressure sources communicate with the enclosed volume. Only a single pressure sensor may be needed, reducing the cost and complexity of the system. It is noted that the leakage may be intentional, e.g. if an object to be lifted is not large enough to engage all suction cups. Also, the leakage does not have to be from the side of the suction cup or corresponding element, but may in some cases be from the pressure source side, e.g. if an ejector or compressor is leaking.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present invention are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic side section of an embodiment of a system of the present invention.
Fig 2 is a schematic circuit diagram of an embodiment of a system of the present invention with a plurality of ejectors, each with a separate source of pressurized fluid.
Fig 3 is a schematic circuit diagram of another embodiment of a system of the present invention with a plurality of ejectors, each with a communal source of pressurized fluid.

### DETAILED DESCRIPTION

Embodiments will now be described more fully hereinafter with reference to the accompanying drawings, in which certain embodiments are shown. However, other embodiments in many different forms are possible within the scope of the present invention.

Rather, the following embodiments are provided by way of example so that this disclosure will be thorough and complete, and will fully convey the scope of the invention to those skilled in the art. Like numbers refer to like elements throughout the description. Herein, examples are given with pressure sources in the form of vacuum ports connected to vacuum pumps in the form of ejectors. However, the invention is also relevant for other pressure sources, including overpressure sources, and other pumps, e.g. compressors for overpressure sources.

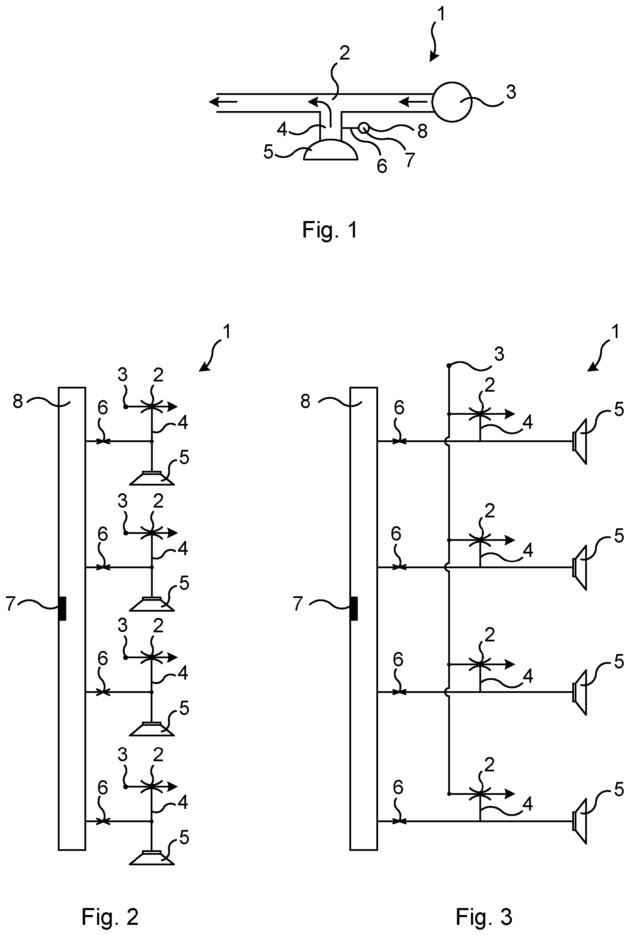

Figure 1 illustrates an embodiment of a system 1 comprising a vacuum ejector 2 for providing a pressure source 4 in the form of a vacuum port. A pressure source 3 of a pressurized fluid, e.g. of pressurized air, flows past an opening to the vacuum port 4, sucking out the air (or other fluid) from the vacuum port. A suction cup 5 is mounted to the vacuum port 4. If the suction cup 5 sealingly engages e.g. a surface of an object to be lifted, a reduced pressure is formed in the suction cup and the vacuum port by means of the ejector 2. In accordance with the present invention, the pressure source 4 is provided with an opening 6 via which the pressure source is in fluid communication with the container 8 which encloses a relatively small volume. The opening 6 between the pressure source and the container is preferably relatively small. According to the invention, the opening is provided with a restrictor, e.g. a choke valve, to restrict the area of the opening 6. Specifically, the opening 6 has preferably substantially smaller cross-sectional area than the main opening of the pressure source/vacuum port, e.g. connected to the suction cup 5. Thereby, the pressure in the volume enclosed by the container 8 changes to different levels (which may be distinct and known beforehand) depending on how many pressure sources connected to the container 8 are leaking (e.g. via the suction cup 5). The opening 6 may for instance have a cross-sectional area which is less than ten times smaller than the cross-sectional area of the main opening of the pressure source 4, e.g. less than one hundred times smaller.

A pressure sensor 7 is provided in the container 8 to measure the pressure therein.

Figures 2 and 3 illustrates two different embodiments of a system 1 with a plurality of ejectors 2 for vacuum ports. In figure 2, each ejector 2 is connected to a respective source of pressurized fluid (e.g. air), while in figure 3, a single source of pressurized fluid is connected to a plurality of ejectors 2. In case of overpressure ports, the ejectors may be exchanged for e.g. compressors.

When there is no leakage, the pressure in the container 8 is the same as in the suction cups 5. When there is a leakage at one pressure source/vacuum port 4, e.g. because its corresponding suction cup 5 is not properly engaged with an object surface, vacuum is not formed in that vacuum port and a fluid flow (air) will continuously pass through the opening 6 into the container 8. Other, non-leaking, vacuum ports 4 connected to the container 8 will compensate for this (small) flow into the container 8 by sucking the fluid out of the container 8 since the pressure inside the container is higher than in said other vacuum ports. This gives a difference in pressure level of the volume enclosed by container 8 which is higher than the difference in pressure level of the other vacuum ports. However, the pressure level in the other ports will rise slightly due to the leakage via the container, but this rise is kept low since the openings 6 are small and restrict the leakage via the container 8.

For each pressure source with is leaking, the pressure in the volume enclosed by container 8 is changed. Thus, by measuring the pressure in the container 8, it is possible to determine, not only that a pressure source 4 is leaking, but how many pressure sources are leaking. A relatively small volume enclosed by container 8 implies that the pressure therein changes rapidly and any leakage may be detected by the pressure sensor 7 with short or almost no delay. For instance, if the pressure sources are vacuum sources, an increased pressure as measured in the container 8 to different levels may indicate that, and how many, vacuum sources are leaking. Similarly, if the pressure sources are overpressure sources, a reduced pressure as measured in the container 8 to different levels may indicate that, and how many, overpressure sources are leaking.

The pressure sensor 7 may be connected to a control unit such that the control unit receives signals from the pressure sensor regarding the pressure it measures in the container 8. The control unit may then determine whether the measured pressure is above or below a predetermined threshold, indicating a leakage. Also, further predetermined thresholds may allow the control unit to determine how many pressure sources are leaking.

There may be a predetermined pressure level which is required and if this level is not reached, the system may be turned off for maintenance or some other action may be performed in order to reach the required pressure level. For instance, the pressure in the volume enclosed by container 8 may be required to be below a maximum threshold and if the measured pressure reaches or passes this maximum threshold, indicating too much leakage (e.g. of too many vacuum ports) in the system for the system to be able to perform its task (e.g. lifting an object by means of suction cups 5). This may also be determined by the control unit. Similarly, especially in case of overpressure sources, the pressure in the volume enclosed by container 8 may be required to be above a minimum threshold and if the measured pressure reaches or passes this minimum threshold, indicating too much leakage (e.g. of too many overpressure ports) in the system for the system to be able to perform its task.

The present invention has mainly been described above with reference to a few embodiments. However, as is readily appreciated by a person skilled in the art, other embodiments than the ones disclosed above are equally possible within the scope of the present invention, as defined by the appended claims.

## Claims

1. A system (1) comprising:
a plurality of pressure sources (4) wherein the pressure sources are vacuum ports in fluid communication with at least one vacuum pump (2), or wherein the pressure sources are overpressure ports connected to at least one compressor or other overpressure pump;
a container (8) enclosing a volume; and
a pressure sensor (7) arranged to detect a pressure in the enclosed volume;
wherein the container (8) is connected to each of the pressure sources (4) via a respective opening (6) whereby the enclosed volume is in fluid communication with the pressure source;
**characterized in that**
for each of the pressure sources, a restrictor is provided at the opening (6) between the container and the pressure source, restricting the cross-sectional area of the opening.

2. The system of claim 1, wherein the restrictor is a choke valve.

3. The system of claim 1 or 2, wherein the container (8) is in the form of a pipe.

4. The system of any preceding claim, wherein the pressure sources (4) are vacuum ports.

5. The system of claim 4, further comprising at least one vacuum ejector (2) connected to the vacuum ports (4).

6. The system of claim 5, wherein the at least one vacuum ejector (2) is in fluid communication with at least two, e.g. all, of the vacuum ports (4).

7. The system of claim 5 or 6, wherein each of the vacuum ports (4) is connected to a suction cup (5).

8. The system of claim 7, wherein the restrictor restricts the cross-sectional area of the opening (6) to less than ten times smaller than a main opening between the pressure source (4) and the suction cup (5) connected thereto.

9. The system of any claim 5-8, wherein the at least one vacuum ejector (2) is connected to a compressed air source (3).

10. The system of any claim 1-3, wherein the pressure sources (4) are overpressure ports.

11. The system of claim 10, further comprising at least one compressor connected to the overpressure ports.

12. The system of claim 11, wherein the at least one compressor is in fluid communication with at least two, e.g. all, of the overpressure ports.

13. A method for pressure measurement in the system (1) of any preceding claim, the method comprising:
detecting a pressure in the enclosed volume of the container (8) in fluid communication with the plurality of pressure sources (4); and
determining, based on the detected pressure, that at least one of the pressure sources (4) is leaking, said determining comprising determining that the detected pressure is above or below a predetermined threshold.

14. The method of claim 13, wherein the determining comprises determining, based on the detected pressure, how many of the plurality of pressure sources (4) are leaking in view of distinct different pressure levels known beforehand.

## Patentansprüche

1. System (1), das umfasst:
mehrere Druckquellen (4), wobei die Druckquellen Vakuumanschlüsse in einer Fluidkommunikation mit mindestens einer Vakuumpumpe (2) sind, oder wobei die Druckquellen Überdruckanschlüsse sind, die mit mindestens einem Kompressor oder mit einer anderen Überdruckpumpe verbunden sind;
einen Behälter (8), der ein Volumen umschließt; und
einen Drucksensor (7), der angeordnet ist, um einen Druck in dem umschlossenen Volumen zu detektieren;
wobei der Behälter (8) mit jeder der Druckquellen (4) über eine jeweilige Öffnung (6) verbunden ist, wodurch das umschlossene Volumen in einer Fluidkommunikation mit den Druckquellen steht;
**dadurch gekennzeichnet, dass**
für jede der Druckquellen ein Begrenzer an der Öffnung (6) zwischen dem Behälter und der Druckquelle bereitgestellt ist, wobei der Begrenzer die Querschnittsfläche der Öffnung begrenzt.

2. System nach Anspruch 1, wobei der Begrenzer ein Absperrventil ist.

3. System nach Anspruch 1 oder 2, wobei der Behälter (8) die Form eines Rohres aufweist.

4. System nach einem vorhergehenden Anspruch, wobei die Druckquellen (4) Vakuumanschlüsse sind.

5. System nach Anspruch 4, das ferner mindestens einen Vakuum-Ejektor (2) umfasst, der mit den Vakuumanschlüssen (4) verbunden ist.

6. System nach Anspruch 5, wobei sich der mindestens eine Vakuum-Ejektor (2) in einer Fluidkommunikation mit mindestens zwei, z.B. mit allen, Vakuumanschlüssen (4) befindet.

7. System nach Anspruch 5 oder 6, wobei jeder der Vakuumanschlüsse (4) mit einer Saugglocke (5) verbunden ist.

8. System nach Anspruch 7, wobei der Begrenzer die Querschnittsfläche der Öffnung (6) auf eine Größe begrenzt, die kleiner als das 10fache dessen ist, was kleiner als eine Hauptöffnung zwischen der Druckquelle (4) und der Saugglocke (5) ist, die damit verbunden ist.

9. System nach einem der Ansprüche 5-8, wobei der mindestens eine Vakuum-Ejektor (2) mit einer Druckluftquelle (3) verbunden ist.

10. System nach einem der Ansprüche 1-3, wobei die Druckquellen (4) Überdruckanschlüsse sind.

11. System nach Anspruch 10, das ferner mindestens einen Kompressor umfasst, der mit den Überdruckanschlüssen verbunden ist.

12. System nach Anspruch 11, wobei sich der mindestens eine Kompressor in einer Fluidkommunikation mit mindestens zwei, z.B. mit allen, Überdruckanschlüssen befindet.

13. Verfahren für eine Druckmessung in dem System (1) nach einem vorhergehenden Anspruch, wobei das Verfahren umfasst:
Detektieren eines Drucks in dem umschlossenen Volumen des Behälters (8) in der Fluidkommunikation mit den mehreren Druckquellen (4); und
Bestimmen auf der Grundlage des detektierten Drucks, dass mindestens eine der Druckquellen (4) undicht ist, wobei das Bestimmen ein Bestimmen derart umfasst, dass der detektierte Druck oberhalb oder unterhalb eines vorgegebenen Schwellenwerts liegt.

14. Verfahren nach Anspruch 13, wobei das Bestimmen auf der Grundlage des detektierten Drucks ein Bestimmen umfasst, wie viele der mehreren Druckquellen (4) angesichts der deutlich verschiedenen Druckhöhen, die zuvor bekannt sind, undicht sind.

## Revendications

1. Système (1) comprenant :
une pluralité de sources de pression (4), dans lequel les sources de pression sont des orifices à vide en communication fluidique avec au moins une pompe à vide (2), ou dans lequel les sources de pression sont des orifices à surpression relié à au moins un compresseur ou une autre pompe à surpression ;
un récipient (8) renfermant un volume ; et
un capteur de pression (7) conçu pour détecter une pression dans le volume renfermé ;
dans lequel le récipient (8) est relié à chacune des sources de pression (4) via une ouverture (6) respective, moyennant quoi le volume renfermé est en communication fluidique avec la source de pression ;
**caractérisé en ce que**
pour chacune des sources de pression, un limiteur est disposé au niveau de l'ouverture (6) entre le récipient et la source de pression, limitant l'aire de section transversale de l'ouverture.

2. Système selon la revendication 1, dans lequel le limiteur est un claper d'étranglement.

3. Système selon la revendication 1 ou 2, dans lequel le récipient (8) se présente sous la forme d'un tuyau.

4. Système selon l'une quelconque des revendications précédentes, dans lequel les sources de pression (4) sont des orifices à vide.

5. Système selon la revendication 4, comprenant en outre au moins un éjecteur à vide (2) relié aux orifices à vide (4).

6. Système selon la revendication 5, dans lequel l'au moins un éjecteur à vide (2) est en communication fluidique avec au moins deux des orifices à vide (4), par exemple avec tous.

7. Système selon la revendication 5 ou 6, dans lequel chacun des orifices à vide (4) est relié à une ventouse (5).

8. Système selon la revendication 7, dans lequel le limiteur limite l'aire de section transversale de l'ouverture (6) pour la rendre moins de dix fois plus petite qu'une ouverture principale entre la source de pression (4) et la ventouse (5) reliée à celle-ci.

9. Système selon l'une quelconque des revendications 5 à 8, dans lequel l'au moins un éjecteur à vide (2) est relié à une source d'air comprimé (3).

10. Système selon l'une quelconque des revendications 1 à 3, dans lequel les sources de pression (4) sont des orifices à surpression.

11. Système selon la revendication 10, comprenant en outre au moins un compresseur relié aux orifices à surpression.

12. Système selon la revendication 11, dans lequel l'au moins un compresseur est en communication fluidique avec au moins deux des orifices à surpression, par exemple avec tous.

13. Procédé de mesure de pression dans le système (1) selon l'une quelconque des revendications précédentes, le procédé comprenant :
la détection d'une pression dans le volume renfermé du récipient (8) en communication fluidique avec la pluralité de sources de pression (4) ; et
la détermination, sur la base de la pression détectée, que l'une au moins des sources de pression (4) fuit, ladite détermination comprenant la détermination que la pression détectée est supérieure ou inférieure à un seuil prédéterminé.

14. Procédé selon la revendication 13, dans lequel la détermination comprend la détermination, sur la base de la pression détectée, de combien parmi la pluralité de sources de pression (4) fuient compte tenu de différents niveaux de pression distincts connus préalablement.
